# EUROPEAN PATENT SPECIFICATION

(11) **EP 4 194 711 B1**
(45) Date of publication and mention of the grant of the patent: **02.07.2025**
(21) Application number: 21854390.8
(22) Date of filing: 29.07.2021
(51) Int. Cl.: F16D 13/72, F16D 13/74, F16D 13/64, F16D 13/56, F16D 23/12

(54) **POWER TRANSMISSION DEVICE**
KRAFTÜBERTRAGUNGSVORRICHTUNG
DISPOSITIF DE TRANSMISSION DE PUISSANCE

(30) Priority: 06.08.2020 JP 2020134038
(43) Date of publication of application: 14.06.2023
(73) Proprietor: Kabushiki Kaisha F.C.C., Hamamatsu-shi, Shizuoka 431-1394 (JP)
(72) Inventor: OZAWA, Yoshihiko, Hamamatsu-shi, Shizuoka 431-1304 (JP); CHEN, Han Hiong, Hamamatsu-shi, Shizuoka 431-1304 (JP); YOSHIMOTO, Katsu, Hamamatsu-shi, Shizuoka 431-1304 (JP)
(74) Representative: Grünecker Patent- und Rechtsanwälte PartG mbB
(86) International application number: PCT/JP2021/028049
(87) International publication number: WO 2022/030349

(56) References cited:
- JP-A- 2011 163 425
- JP-A- 2017 172 652
- JP-A- 2019 143 689
- JP-U- S5 850 231
- JP-Y2- S5 224 684
- KR-A- 20180 013 303
- US-A1- 2008 141 806
- US-A1- 2011 192 699
- US-A1- 2019 257 369

## Description

### TECHNICAL FIELD

The present invention relates to a power transmission apparatus that is able to freely transmit a rotational force of an input member to an output member or cut off the rotational force.

### BACKGROUND ART

Usually, a power transmission apparatus included in a motorcycle freely transmits a driving force of an engine to a transmission and a driving wheel or cuts off the driving force. Such a power transmission apparatus includes: an input member connected to an engine; an output member connected to a transmission and a driving wheel; a clutch member connected to the output member; and a pressure member that is able to move toward or away from the clutch member. Moving the pressure member toward the clutch member presses driving and driven clutch plates against each other so as to transmit power therebetween. Moving the pressure member away from the clutch member releases a pressing force exerted on the driving and driven clutch plates so as to cut off transmission of the power therebetween.

As disclosed, for example, in Patent Literature 1, a power transmission apparatus known in the art includes a clutch member provided with a plurality of oil supply holes. Through the oil supply holes, oil supplied from the center of rotation (i.e., a clutch activation shaft) is allowed to flow to driving and driven clutch plates. Thus, oil is sufficiently suppliable to the driving and driven clutch plates, making it possible to smoothly press the driving and driven clutch plates against each other and release a pressing force exerted thereon.

### CITATION LIST

### PATENT LITERATURE

Patent Literature 1: JP 2011-163425 A
Document JP 2017 172 652 A discloses a power transmission apparatus comprising a clutch outer member non-rotatably and slidably supporting a friction disc in the direction of a clutch axis. A clutch center member manually non-rotatably and slidably supporting a clutch disc in the direction of a clutch axis, and a pressure plate is formed with a deep hole portion which houses a clutch spring engaging with the clutch center member.
Document US 2011/192 699 A1 discloses a clutch apparatus including a clutch outer member for supporting friction discs, which are nonrotatable relative to the clutch outer member, and are axially slidable along a clutch axis; a clutch inner member for supporting clutch discs, which are nonrotatable relative to the clutch inner member, and are axially slidable along the clutch axis, and a pressure plate having a deep recess for accommodating a clutch spring engaged with the clutch inner member. The deep recess includes a bottom portion having a spring seat for receiving the clutch spring, and a partially cylindrical shape wall portion having an axis parallel to the clutch axis. The wall portion is oriented towards the clutch axis. The deep recess has a communicating portion formed therein for establishing the communication between the inner and outer surfaces of the wall portion so as to discharge oil towards the friction and clutch discs during operation of the clutch apparatus.
Document US 2019/257 369 A1 discloses a pressure plate of a clutch device including a clutch outer member for supporting friction discs, and a clutch center member for supporting clutch discs. The pressure plate has a deep hole portion for accommodating a clutch spring acting between the pressure plate and the clutch center member; and a through hole at a center thereof extending between an inside and an outside of the clutch device in a clutch axis direction. Oil is supplied from the outside into the through hole. The pressure plate has a radial passage extending in a radially outward direction from the through hole at an axially inner end portion of the through hole to make the inside and outside of the through hole communicate with each other. An annular rib is formed on a peripheral surface of an outer end portion of the through hole extending toward the center of the through hole.
Document KR 2018 0013 303 A discloses a wet clutch comprising a clutch pack delivering power of an input shaft under pressurization; a housing in which a clutch space storing the clutch pack and an oil circuit path enabling fluid to connect an upper part of the clutch space and a central part of the clutch space; a piston capable of pressurizing the clutch pack; an oil control member opening the oil circuit path when the clutch pack is pressurized. A frictional force caused by fluid viscosity resistance between frictional plates of the clutch pack can be reduced.

### SUMMARY OF INVENTION

### TECHNICAL PROBLEM

In the power transmission apparatus known in the art, the driven clutch plates are attached exclusively to the clutch member, so that oil is allowed to flow from the oil supply holes defined in the clutch member and is thus sufficiently suppliable to the driven clutch plates. A power transmission apparatus including not only driven clutch plates attached to a clutch member but also a driven clutch plate attached to a pressure member, however, has difficulty in allowing oil to flow from oil supply holes defined in the clutch member to the driven clutch plate attached to the pressure member such that the oil is supplied thereto. It is conceivable that depending on the type of power transmission apparatus or the type of vehicle in which a power transmission apparatus is to be used, oil may need to be supplied exclusively to a driven clutch plate attached to a pressure member.

The present invention has been made in view of the above-described circumstances and its object is to provide a power transmission apparatus that is able to supply a sufficient amount of oil to a driven clutch plate attached to a pressure member.

### SOLUTION TO PROBLEM

The object of the invention is solved by a power transmission apparatus according to claim 1.
Preferred embodiments of the invention are mentioned in the dependent claims.

### EFFECTS OF INVENTION

According to the invention of claim 1, the driven clutch plates are attached to the clutch member. Accordingly, the oil is sufficiently suppliable to the driven clutch plate attached to the pressure member.

### BRIEF DESCRIPTION OF DRAWINGS

FIG. 1 is an external view of a power transmission apparatus according to an embodiment of the present invention.
FIG. 2 is a vertical cross-sectional view of an internal structure of the power transmission apparatus.
FIG. 3 is a partially enlarged view of the power transmission apparatus illustrated in FIG. 2.
FIG. 4 is a partially enlarged view of the power transmission apparatus illustrated in FIG. 2.
FIG. 5 is a perspective view of a clutch housing of the power transmission apparatus.
FIG. 6 is a three-view drawing of a first clutch member of the power transmission apparatus.
FIG. 7 is a perspective view of the first clutch member.
FIG. 8 is a three-view drawing of a second clutch member of the power transmission apparatus.
FIG. 9 is a perspective view of the second clutch member.
FIG. 10 is a three-view drawing of a pressure member of the power transmission apparatus.
FIG. 11 is a cross-sectional view of the pressure member taken along the line XI-XI in FIG. 10.
FIG. 12 is a front perspective view of the pressure member.
FIG. 13 is a rear perspective view of the pressure member.
FIG. 14 is a vertical cross-sectional view of a centrifugal clutch means of the power transmission apparatus.
FIG. 15 is a partially cutaway perspective view of the centrifugal clutch means.
FIG. 16(a) is a schematic diagram illustrating how a pressing assist cam of the power transmission apparatus acts.
FIG. 16(b) is a schematic diagram illustrating how a back torque limiter cam of the power transmission apparatus acts.
FIG. 17 is a schematic diagram of a vehicle in which the power transmission apparatus is used.
FIG. 18 is a cross-sectional view illustrating a state of the power transmission apparatus where each weight member is located at a radially inner position.
FIG. 19 is a cross-sectional view illustrating a state of the power transmission apparatus where each weight member is located at an intermediate position between the radially inner position and a radially outer position.
FIG. 20 is a cross-sectional view illustrating a state of the power transmission apparatus where each weight member is located at the radially outer position.
FIG. 21 is a cross-sectional view illustrating a state of the power transmission apparatus where each weight member is located at the radially outer position and the pressure member is located at an operating position.
FIG. 22 is a vertical cross-sectional view of a power transmission apparatus according to another embodiment of the present invention.
FIG. 23 is a vertical cross-sectional view of a power transmission apparatus according to still another embodiment of the present invention.
FIG. 24 is a vertical cross-sectional view of a power transmission apparatus according to yet another embodiment of the present invention (which includes an oil inlet in the form of an elongated hole).
FIG. 25 is a front perspective view of a pressure member of the power transmission apparatus.
FIG. 26 is a rear perspective view of the pressure member of the power transmission apparatus.

### DESCRIPTION OF EMBODIMENTS

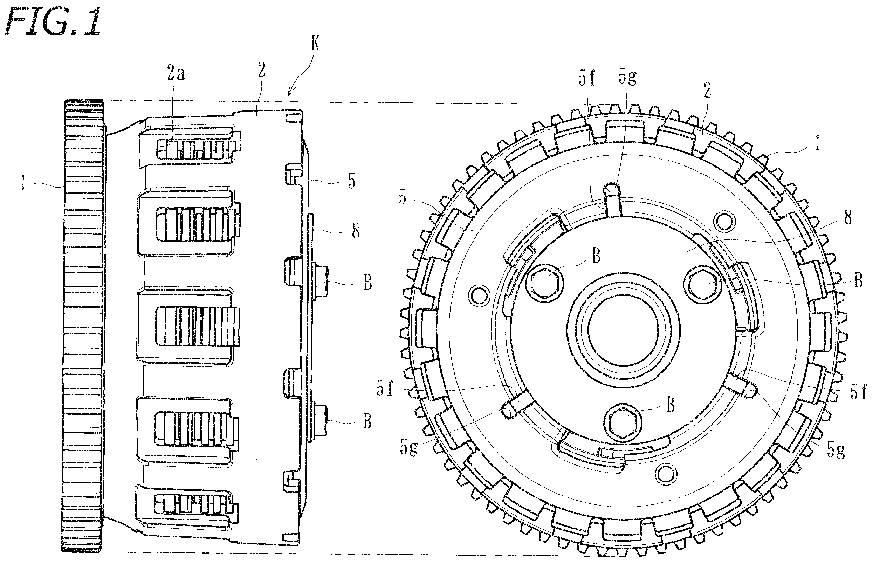

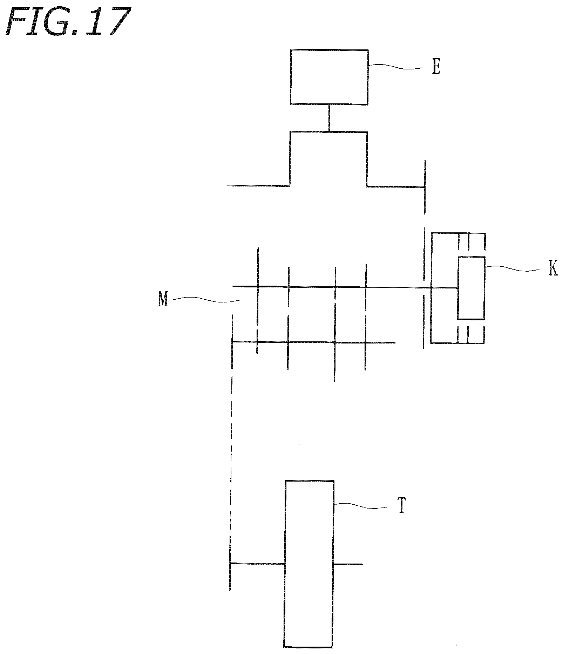

Embodiments of the present invention will be described below in detail with reference to the drawings. As illustrated in FIG. 17, a power transmission apparatus K according to the present embodiment is disposed in a vehicle so as to freely transmit a driving force of an engine E to a driving wheel T through a transmission M or cut off the driving force. As illustrated in FIGS. 1 to 15, the power transmission apparatus K includes: a clutch housing 2 provided with an input gear 1 (which is an input member) that rotates with the driving force of the engine E of the vehicle; an output shaft 3 (which is an output member) connected to the transmission M; a clutch member (which includes a first clutch member 4a and a second clutch member 4b); a pressure member 5; a plurality of driving clutch plates (6a, 6b); a plurality of driven clutch plates (7a, 7b); a centrifugal clutch means 9 including weight members 10; and an auxiliary clutch plate 17.

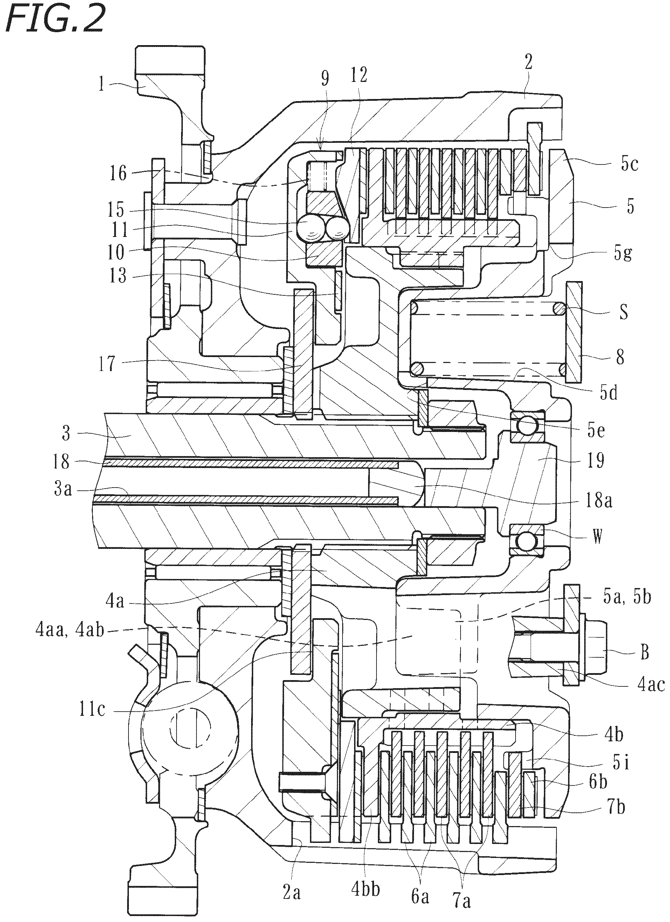

The input gear 1 is rotatable around the output shaft 3 upon receiving a driving force (or a rotational force) transmitted from the engine E. The input gear 1 is connected to the clutch housing 2 with a fastener, such as a rivet. The clutch housing 2 is a cylindrical member with an opening defined at its right end in FIG. 2 and is connected to the input gear 1. The clutch housing 2 is rotatable together with rotation of the input gear 1 with the driving force of the engine E.

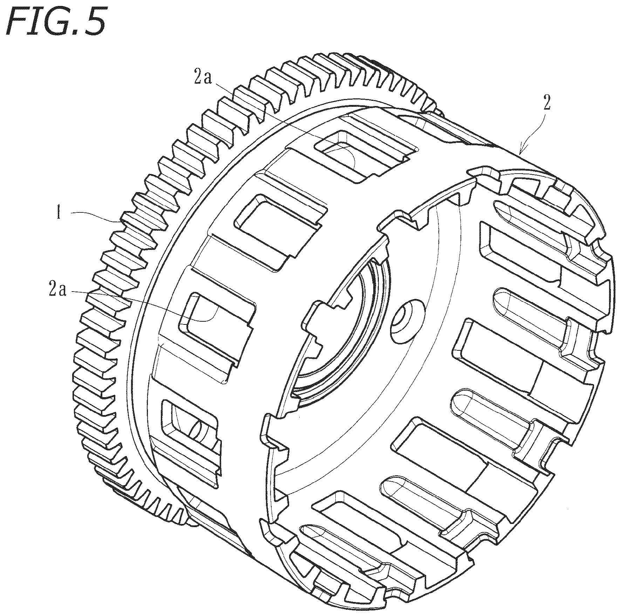

As illustrated in FIG. 5, the clutch housing 2 is circumferentially provided with a plurality of cut-outs 2a. The driving clutch plates (6a, 6b) are fitted to the cut-outs 2A and thus attached to the clutch housing 2. The driving clutch plates (6a, 6b) are each made of a substantially annular plate material. The driving clutch plates (6a, 6b) are rotatable together with rotation of the clutch housing 2 and slidable in an axial direction (which corresponds to a right-left direction in FIG. 2). The driving clutch plates 6a are attached to the clutch housing 2 so as to be adjacent to the second clutch member 4b. The driving clutch plate 6b is attached to the clutch housing 2 so as to be adjacent to the pressure member 5.

The driven clutch plates 7a are attached to the clutch member (which includes the first clutch member 4a and the second clutch member 4b). The driven clutch plates 7a are arranged alternately with the driving clutch plates 6a attached to the clutch housing 2. The clutch member is connected to the output shaft 3 (i.e., the output member), which is able to rotate the driving wheel T through the transmission M of the vehicle. The clutch member includes two components (i.e., the first clutch member 4a and the second clutch member 4b) assembled to each other.

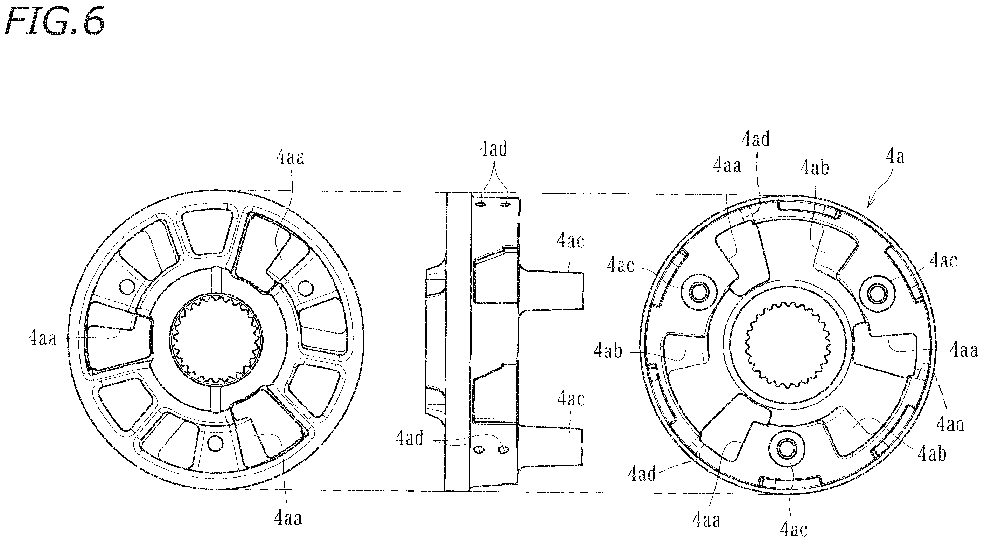

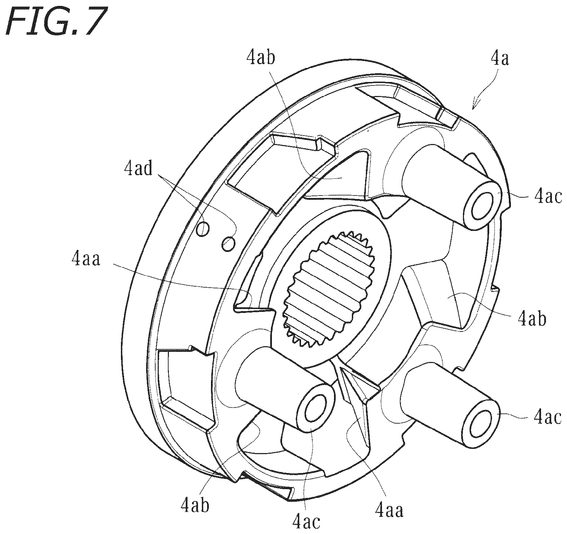

The output shaft 3 is inserted through an insertion hole (see FIGS. 6 and 7) defined in the center of the first clutch member 4a. A gear provided on the first clutch member 4a and a gear provided on the output shaft 3 are in mesh with each other so as to be connected to each other in the direction of rotation. As illustrated in FIGS. 6 and 7, the first clutch member 4a is provided with: inclined surfaces 4aa defining a pressing assist cam; and inclined surfaces 4ab defining a back torque limiter cam. The reference signs "4ac" in FIGS. 6 and 7 each indicate a boss provided with an insertion hole for a bolt B for connection between the first clutch member 4a and a securing member 8.

As illustrated in FIG. 2, the output shaft 3 inserted through the first clutch member 4a is provided with an insertion hole 3a extending in the axial direction. Oil is supplied into the clutch housing 2 through the insertion hole 3a. An operating member 18, which is a rod member, is inserted into the insertion hole 3a. An operating portion 18a is attached to an end of the operating member 18. The operating portion 18a is assembled to the operating member 18 such that the operating portion 18a is in abutment with a link member 19. The link member 19 is connected to a bearing W supporting the pressure member 5 such that the pressure member 5 is rotatable. Operating a clutch operating means (not illustrated) moves the operating member 18 rightward in FIG. 2, so that the operating portion 18a pushes the link member 19. Accordingly, the pressure member 5 is pushed rightward and is thus movable from an operating position to a non-operating position.

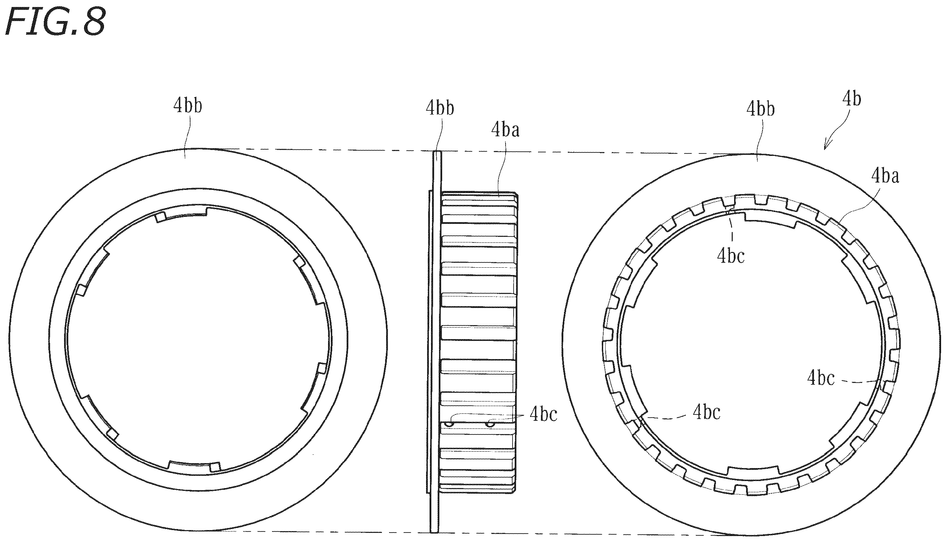

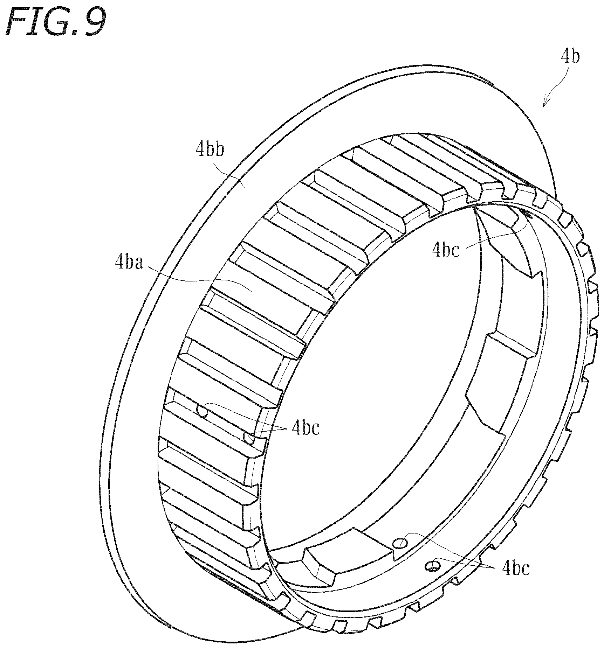

As illustrated in FIGS. 8 and 9, the second clutch member 4b is an annular member provided with a flange 4bb. The driven clutch plates 7a are spline-fitted to spline-fitting portions 4ba provided on the outer peripheral surface of the second clutch member 4b and are thus attached to the second clutch member 4b. As illustrated in FIGS. 2 to 4, the pressure member 5 is assembled to the clutch member (which includes the first clutch member 4a and the second clutch member 4b) such that the driving clutch plates (6a, 6b) and the driven clutch plates (7a, 7b) are alternately stacked and secured between a flange 5c of the pressure member 5 and the flange 4bb of the second clutch member 4b.

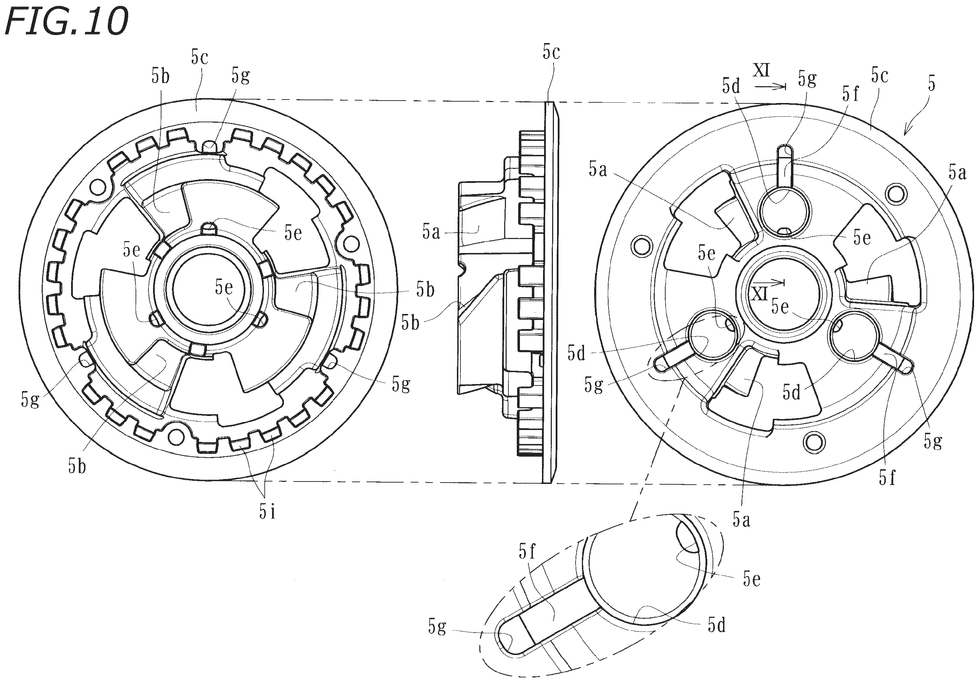

As illustrated in FIGS. 10 to 13, the pressure member 5 is a disk member provided with the flange 5c extending along the peripheral edge of the pressure member 5. The pressure member 5 is movable between: the operating position where the driving clutch plates (6a, 6b) and the driven clutch plates (7a, 7b) are pressed against each other so as to enable transmission of the driving force of the engine E to the wheel; and the non-operating position where a pressing force exerted on the driving clutch plates (6a, 6b) and the driven clutch plates (7a, 7b) is released so as to cut off transmission of the driving force of the engine E to the wheel.

More specifically, as illustrated in FIGS. 8 and 9, the spline-fitting portions 4ba provided on the second clutch member 4b form integral projections and depressions along substantially the entire outer peripheral side surface of the second clutch member 4b. Fitting the driven clutch plates 7a to recessed grooves that define the spline-fitting portions 4ba restricts movement of the driven clutch plates 7a in the direction of rotation while allowing movement of the driven clutch plates 7a in the axial direction relative to the second clutch member 4b. The driven clutch plates 7a are rotatable together with the second clutch member 4b.

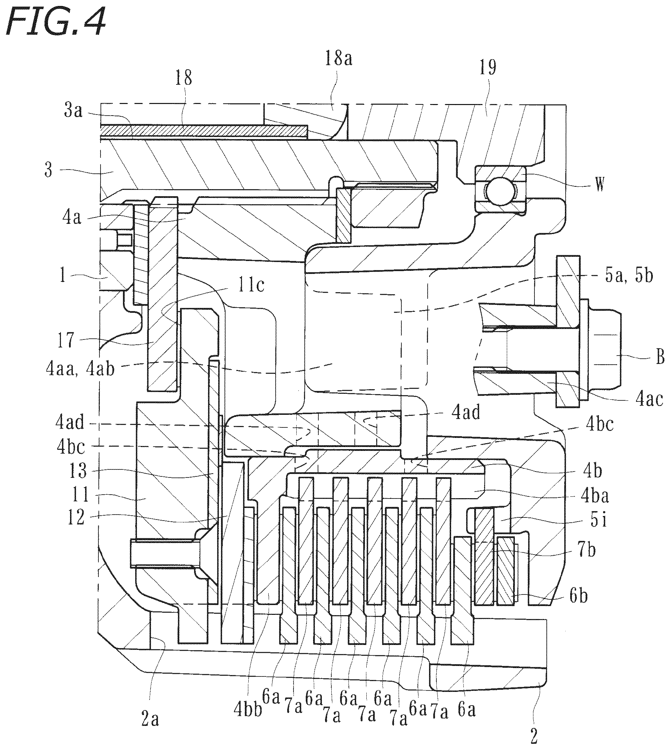

As illustrated in FIG. 4, the first clutch member 4a and the second clutch member 4b according to the present embodiment are respectively provided with a plurality of oil supply holes (4ad) and a plurality of oil supply holes (4bc) through which oil is allowed to flow to the driven clutch plates 7a attached to the second clutch member 4b. Oil flowing through the insertion hole 3a is supplied to the driven clutch plates 7a through a region adjacent to an end of the output shaft 3, the oil supply holes 4ad defined in the first clutch member 4a, and the oil supply holes 4bc defined in the second clutch member 4b.

The peripheral edge of the pressure member 5 is circumferentially provided with a plurality of protrusive fitting portions 5i. The driven clutch plate 7b is fitted to the fitting portions 5i and thus attached to the pressure member 5. The driven clutch plate 7b is attached to the pressure member 5, with the driving clutch plate 6b, the driven clutch plate 7b, and an adjacent one of the driving clutch plates 6a being stacked such that a first surface of the driven clutch plate 7b is in contact with the driving clutch plate 6b and a second surface of the driven clutch plate 7b is in contact with the adjacent one of the driving clutch plates 6a. The driven clutch plate 7b is allowed to move in the axial direction relative to the pressure member 5, prevented from moving in the direction of rotation, and rotatable together with the pressure member 5.

The driven clutch plates (7a, 7b) are stacked alternately with the driving clutch plates (6a, 6b), making it possible to press adjacent ones of the clutch plates (6a, 6b, 7a, 7b) against each other or release a pressing force exerted on adjacent ones of the clutch plates (6a, 6b, 7a, 7b). The clutch plates (6a, 6b, 7a, 7b) are allowed to slide in the axial direction of the second clutch member 4b and the pressure member 5. Engaging a clutch by pressing the clutch plates (6a, 6b, 7a, 7b) against each other enables a rotational force of the clutch housing 2 to be transmitted to the output shaft 3 through the second clutch member 4b and the first clutch member 4a. Disengaging the clutch by releasing the pressing force exerted on the clutch plates (6a, 6b, 7a, 7b) causes the first clutch member 4a and the second clutch member 4b to stop following the rotation of the clutch housing 2 such that no rotational force will be transmitted to the output shaft 3.

Accordingly, a state where the driving clutch plates (6a, 6b) and the driven clutch plates (7a, 7b) are pressed against each other enables transmission of a rotational force (i.e., the driving force of the engine E), which is received by the clutch housing 2, to the driving wheel (or the transmission M) through the output shaft 3 (i.e., the output member), and a state where the driving clutch plates (6a, 6b) and the driven clutch plates (7a, 7b) are not pressed against each other makes it possible to cut off transmission of the rotational force (i.e., the driving force of the engine E), which is received by the clutch housing 2, to the output shaft 3 (i.e., the output member).

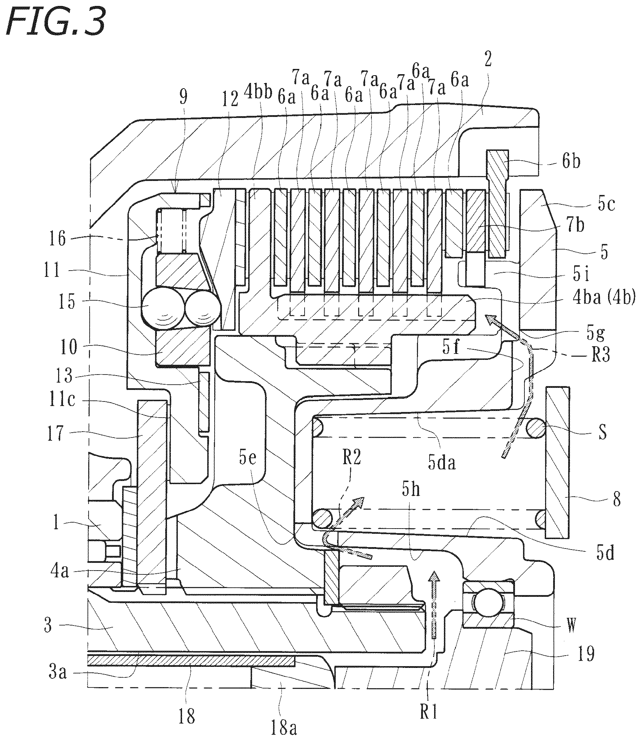

As illustrated in FIGS. 9 and 10, the pressure member 5 is circumferentially provided with a plurality of housing recesses 5d (the number of which is three in the present embodiment). Clutch springs S are each fitted into an associated one of the housing recesses 5d. As illustrated in FIGS. 2 and 3, one end of each clutch spring S housed in the associated housing recess 5d is in abutment with the securing member 8, such that each clutch spring S urges the pressure member 5 in a direction in which the driving clutch plates (6a, 6b) and the driven clutch plates (7a, 7b) are to be pressed against each other.

Operating the clutch operating means (not illustrated) moves the operating member 18, which pushes the link member 19 rightward in FIG. 2. The pressure member 5 is thus pushed rightward and moved to the non-operating position, making it possible to press the driving clutch plates (6a, 6b) and the driven clutch plates (7a, 7b) against each other or stop pressing the driving clutch plates (6a, 6b) and the driven clutch plates (7a, 7b) against each other.

In the present embodiment, as illustrated in FIGS. 6, 7, 10, 12, and 13, the first clutch member 4a is provided with the inclined surfaces 4aa and 4ab, and the pressure member 5 is provided with inclined surfaces 5a and 5b respectively facing the inclined surfaces 4aa and 4ab. Specifically, each inclined surface 4aa comes into abutment with the associated inclined surface 5a so as to provide the pressing assist cam, and each inclined surface 4ab comes into abutment with the associated inclined surface 5b so as to provide the back torque limiter cam.

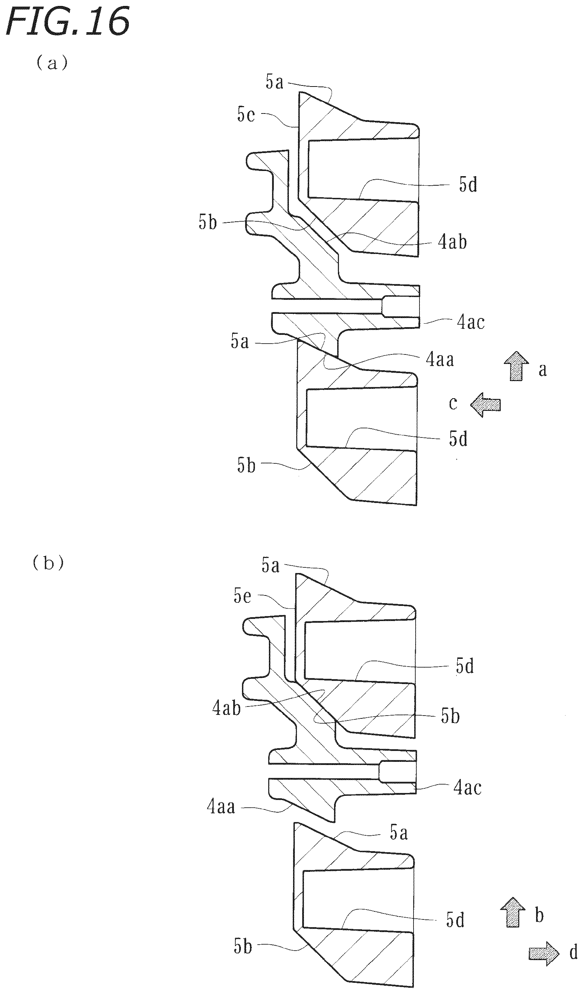

Suppose that the rotation speed of the engine E is increased and the resulting rotational force received by the input gear 1 and the clutch housing 2 is transmittable to the output shaft 3 through the first clutch member 4a and the second clutch member 4b (which means that the weight members 10 are each located at a radially outer position). In this case, as illustrated in FIG. 16(a), the rotational force is applied to the pressure member 5 in an a-direction, which exerts a force on the pressure member 5 in a c-direction in FIG. 16(a) under the action of the pressing assist cam. The pressure member 5 is thus moved in a direction in which its flange 5c comes closer to the flange 4bb of the second clutch member 4b (i.e., leftward in FIG. 2) so as to increase the pressing force exerted on the driving clutch plates (6a, 6b) and the driven clutch plates (7a, 7b).

Suppose that the rotation of the output shaft 3 exceeds the rotation speed of the input gear 1 and the clutch housing 2, resulting in a back torque. In this case, as illustrated in FIG. 16(b), a rotational force is applied to the clutch member 4 in a b-direction, which moves the pressure member 5 in a d-direction in FIG. 16(b) under the action of the back torque limiter cam so as to release the pressing force exerted on the driving clutch plates (6a, 6b) and the driven clutch plates (7a, 7b). This makes it possible to prevent a malfunction in the power transmission apparatus K or a power source (i.e., the engine E) caused by the back torque.

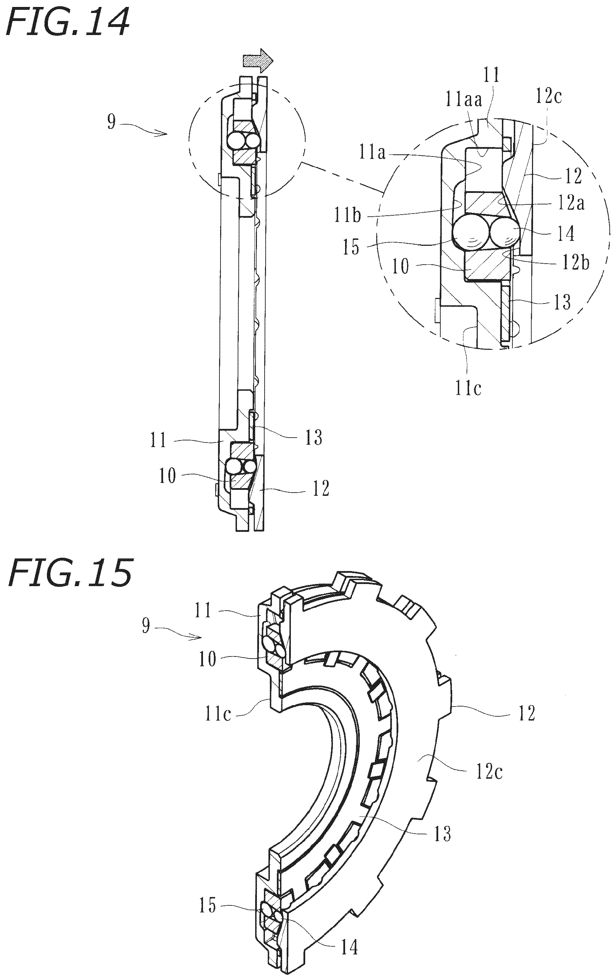

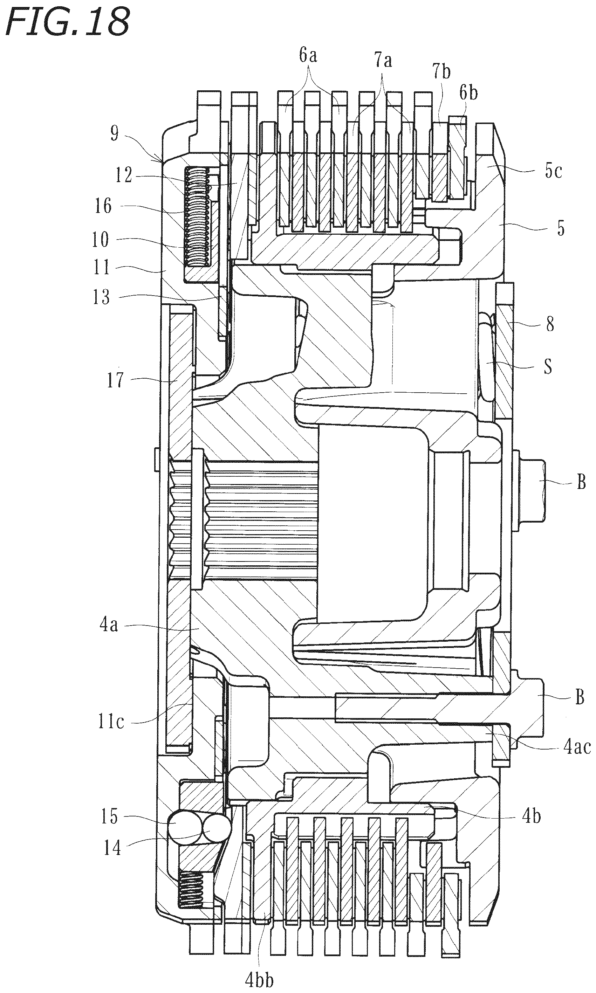

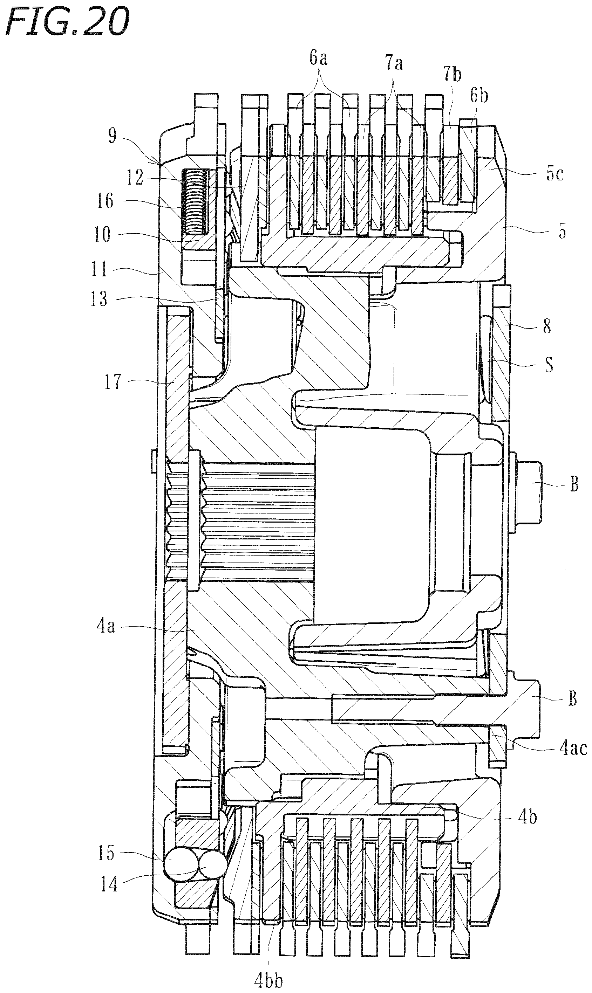

As illustrated in FIGS. 14 to 15, the centrifugal clutch means 9 includes the weight members 10 each movable from a radially inner position (see FIG. 18) to the radially outer position (see FIG. 20) with centrifugal force produced by rotation of the clutch housing 2. When the weight members 10 are each located at the radially outer position, the centrifugal clutch means 9 presses the driving clutch plates (6a, 6b) and the driven clutch plates (7a, 7b) against each other so as to enable transmission of the driving force of the engine E to the wheel (i.e., the driving wheel T). When the weight members 10 are each located at the radially inner position, the centrifugal clutch means 9 releases the pressing force exerted on the driving clutch plates (6a, 6b) and the driven clutch plates (7a, 7b) so as to cut off transmission of the driving force of the engine E to the wheel (i.e., the driving wheel T).

Specifically, the centrifugal clutch means 9 includes: the weight members 10, each of which is a substantially symmetrical polygonal member; a holding member 11 having a supporting member 13 attached thereto; a pressing member 12; first spherical members 14; second spherical members 15; and urging members 16, each of which is a coil spring. The holding member 11 and the pressing member 12 are each circumferentially provided with a plurality of protrusions. Similarly to the driving clutch plates 6, the protrusions are fitted to the cut-outs 2a of the clutch housing 2 such that the holding member 11 and the pressing member 12 are attached to the clutch housing 2. Accordingly, the holding member 11 and the pressing member 12 are each movable in the axial direction of the clutch housing 2 and in engagement with the clutch housing 2 in the direction of rotation so as to be rotatable together with the clutch housing 2.

As illustrated in FIG. 14, the weight members 10 are each housed in an associated one of housing portions 11a of the holding member 11. When no centrifugal force is applied to the weight members 10, the weight members 10 are each held at the radially inner position. Application of centrifugal force to the weight members 10 moves the weight members 10 outward against the urging force of the urging members 16 such that each weight member 10 reaches the radially outer position. The holding member 11 holds the weight members 10 such that each weight member 10 is movable between the radially inner position and the radially outer position. As illustrated in FIG. 15, the holding member 11 is an annular member. The holding member 11 includes: the housing portions 11a which are arranged in the circumferential direction of the holding member 11 and in which the weight members 10 are housed; groove geometries 11b defined in the housing portions 11a; and a pushing surface 11c.

Each housing portion 11a has a recessed shape conforming to the shape and moving range of the associated weight member 10. An outer peripheral wall surface 11aa of each housing portion 11a is allowed to abut against one end of the associated urging member 16. The supporting member 13 is secured to a surface of the holding member 11, which is provided with the housing portions 11a. The weight members 10 are thus held between the holding member 11 and the pressing member 12, with the supporting member 13 interposed therebetween, such that the weight members 10 are movable radially.

Movement of each weight member 10 from the radially inner position to the radially outer position causes the pressing member 12 to move in a direction in which the driving clutch plates (6a, 6b) and the driven clutch plates (7a, 7b) are stacked, i.e., rightward in FIG. 2, such that the driving clutch plates (6a, 6b) and the driven clutch plates (7a, 7b) are pressed against each other. Specifically, as illustrated in FIG. 15, the pressing member 12 is an annular member. The pressing member 12 includes: inclined grooves 12a arranged in the circumferential direction of the pressing member 12; groove geometries 12b each defined adjacent to the associated inclined groove 12a; and a pushing surface 12c.

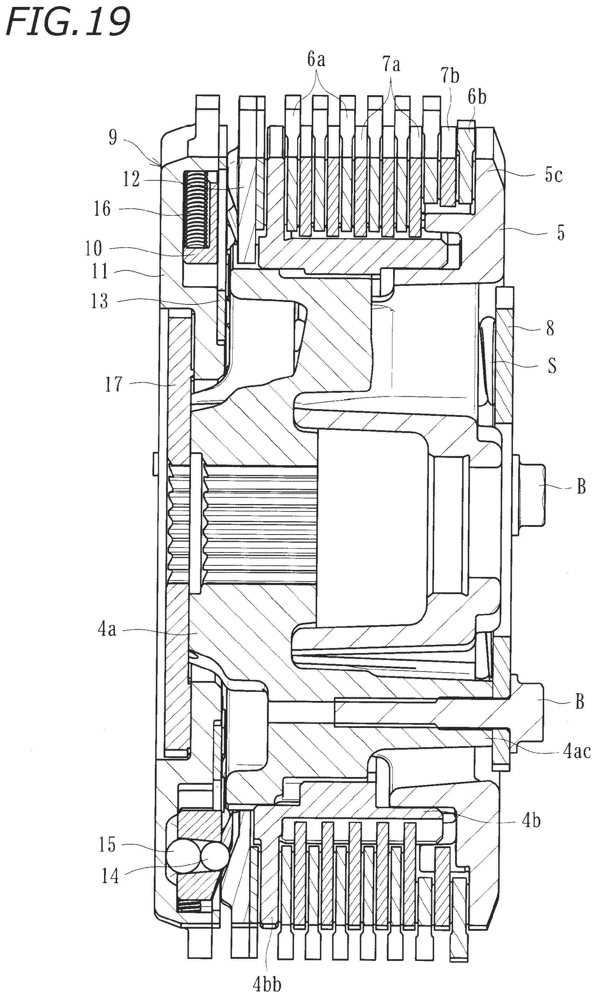

Each inclined groove 12a is defined in a portion of the pressing member 12 facing the associated weight member 10. Each inclined groove 12a is inclined upward from its inner portion to its outer portion. Thus, when the clutch housing 2 is stationary, each weight member 10 is held at the radially inner position with the urging force of the associated urging member 16 (see FIG. 18). Rotation of the clutch housing 2 applies centrifugal force to the weight members 10 so as to move the weight members 10 along the inclined grooves 12a inclined upward. This moves the pressing member 12 in a direction away from the holding member 11, i.e., in the direction in which the driving clutch plates (6a, 6b) and the driven clutch plates (7a, 7b) are to be pressed against each other (see FIGS. 19 and 20).

When the holding member 11 and the pressing member 12 are assembled to each other, with the weight members 10 interposed therebetween, each inclined groove 12a faces the associated weight member 10 as illustrated in FIGS. 14 and 15. With centrifugal force, each weight member 10 moves from the radially inner position to the radially outer position along the associated inclined groove 12a, which moves the pressing member 12 in a direction indicated by the arrow in FIG. 14 (i.e., rightward in FIG. 14). The pushing surface 12c of the pressing member 12 thus pushes the driving clutch plates (6a, 6b) and the driven clutch plates (7a, 7b) such that the driving clutch plates (6a, 6b) and the driven clutch plates (7a, 7b) are pressed against each other. The resulting reaction force moves the holding member 11 in a direction opposite to the direction indicated by the arrow in FIG. 14 (i.e., leftward in FIG. 14), so that the pushing surface 11c of the holding member 11 presses the auxiliary clutch plate 17.

Each first spherical member 14 is a steel ball attached to the associated weight member 10. Each first spherical member 14 is partially protruded from a first opening of a through hole defined in the associated weight member 10 and is in contact with a rolling contact surface of the pressing member 12 so as to be rollable thereon. Each second spherical member 15 is a steel ball attached to the associated weight member 10. Each second spherical member 15 is partially protruded from a second opening of the through hole defined in the associated weight member 10 and is in contact with a rolling contact surface of the holding member 11 so as to be rollable thereon.

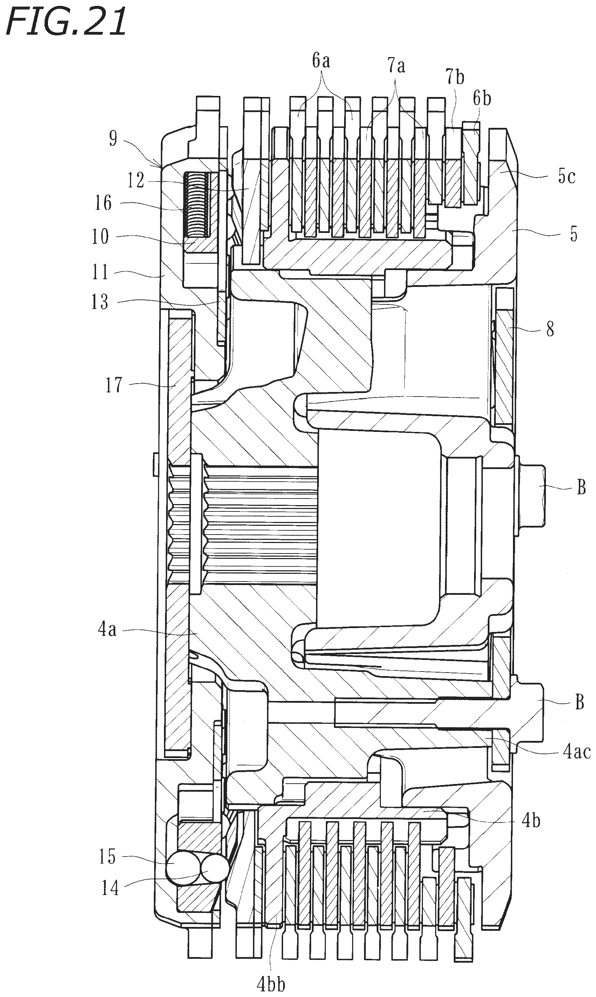

Specifically, when no centrifugal force is applied to the weight members 10, the weight members 10 are each held at the radially inner position (see FIG. 18) such that the pressing force exerted on the driving clutch plates (6a, 6b) and the driven clutch plates (7a, 7b) is released. Application of centrifugal force to the weight members 10 causes each weight member 10 to move outward as illustrated in FIG. 19 and then reach the radially outer position (see FIG. 20). This presses the driving clutch plates (6a, 6b) and the driven clutch plates (7a, 7b) against each other such that the driving force of the engine E is transmittable to the wheel T. FIG. 21 illustrates a state where when each weight member 10 is located at the radially outer position, the pressure member 5 is moved to the non-operating position such that the pressing force exerted on the driving clutch plates (6a, 6b) and the driven clutch plates (7a, 7b) is released.

The auxiliary clutch plate 17 is disposed inside the clutch housing 2. The auxiliary clutch plate 17 is an annular member different in diameter from the driving clutch plates (6a, 6b) and the driven clutch plates (7a, 7b). In the present embodiment, the auxiliary clutch plate 17 is smaller in diameter than the driving clutch plates (6a, 6b) and the driven clutch plates (7a, 7b). As illustrated in FIG. 2, the output shaft 3 (i.e., the output member) is inserted through a central opening of the auxiliary clutch plate 17 so as to be fitted thereto. The auxiliary clutch plate 17 includes a pushed surface facing the pushing surface 11c of the holding member 11.

When the weight members 10 are each located at the radially outer position, i.e., when the driving clutch plates (6a, 6b) and the driven clutch plates (7a, 7b) are pressed against each other, the auxiliary clutch plate 17 is able to transmit the driving force of the engine E to the output shaft 3 upon being pushed by the pushing surface 11c of the holding member 11 and pressed against the pushing surface 11c. When the weight members 10 are each located at the radially inner position, i.e., when the pressing force exerted on the driving clutch plates (6a, 6b) and the driven clutch plates (7a, 7b) is released, the auxiliary clutch plate 17 is able to cut off transmission of the driving force of the engine E to the output shaft 3 upon being relieved of a pressing force applied thereto, owing to a decrease in pushing force exerted by the pushing surface 11c of the holding member 11.

Upon movement of each weight member 10 to the radially outer position, the inclined grooves 12a function as a cam so as to cause the holding member 11 and the pressing member 12 to move away from each other. Accordingly, the pushing surface 12c of the pressing member 12 presses the driving clutch plates (6a, 6b) and the driven clutch plates (7a, 7b) against each other, and the pushing surface 11c of the holding member 11 pushes the pushed surface of the auxiliary clutch plate 17 such that the pushed surface is pressed against the pushing surface 11c so as to transmit the driving force of the engine E to the driving wheel T.

The pressure member 5 according to the present embodiment is provided with oil flow passages through which oil is allowed to flow to the driven clutch plate 7b attached to the pressure member 5. As illustrated in FIGS. 10 to 13, the oil flow passages each include an oil inlet 5e, a groove 5f, and an oil outlet 5g. The oil flow passages allow oil to flow toward the flange 5c of the pressure member 5 through the housing recesses 5d in which the clutch springs S are housed.

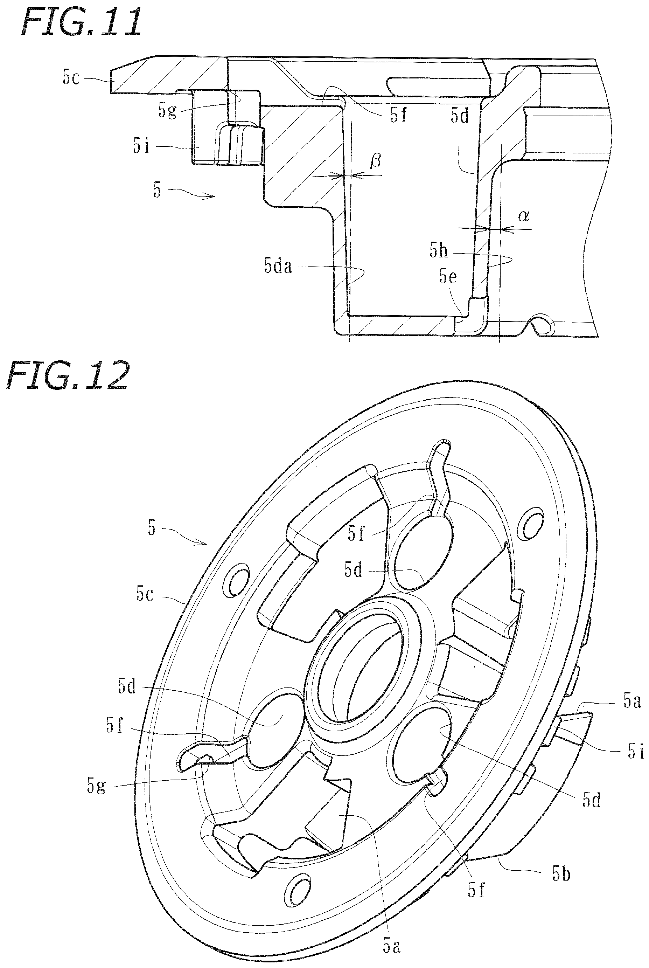

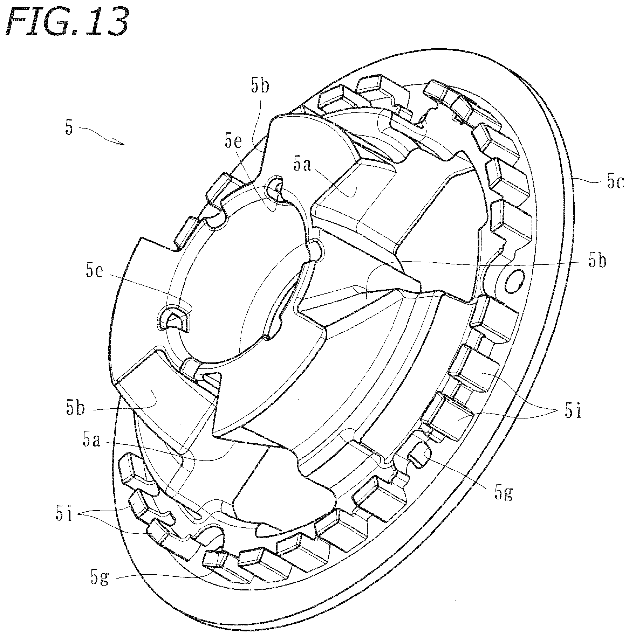

As illustrated in FIGS. 11 and 13, each oil inlet 5e is a first hole defined adjacent to the bottom of the associated housing recess 5d (i.e., defined adjacent to a portion of the associated housing recess 5d that receives an end of the associated clutch spring S). Each oil inlet 5e is in communication with the associated housing recess 5d and opens toward the center of the pressure member 5. As illustrated in FIGS. 11 and 12, each oil outlet 5g is a second hole defined adjacent to the flange 5c of the pressure member 5. Each oil outlet 5g opens toward the radially outer end of the pressure member 5.

Each groove 5f has a groove geometry defined in the surface of the pressure member 5. Each groove 5f brings the opening edge of the associated housing recess 5d into communication with the associated oil outlet 5g (i.e., the associated second hole) and thus allows oil to flow from the opening edge of the associated housing recess 5d to the associated oil outlet 5g (i.e., the associated second hole). As illustrated in FIG. 3, with centrifugal force, oil supplied from the insertion hole 3a (see the arrow R1 in FIG. 3) flows along a surface 5h of the pressure member 5 (which is radially inward of the housing recesses 5d), reaches the oil inlets 5e (i.e., the first holes), and then flows into the housing recesses 5d through the oil inlets 5e (see the arrow R2 in FIG. 3).

The oil, which has flowed into the housing recesses 5d as described above, flows to the openings of the housing recesses 5d along inner peripheral surfaces 5da thereof, flows through the grooves 5f, and then flows out of the oil outlets 5g (see the arrow R3 in FIG.3). The oil, which has flowed out of the oil outlets 5g, reaches the driven clutch plate 7b attached to the pressure member 5, so that the oil is supplied to the driven clutch plate 7b, the driving clutch plate 6b adjacent to the driven clutch plate 7b, and the driving clutch plate 6a adjacent to the driven clutch plate 7b. Accordingly, oil is supplied to the driven clutch plates 7a and the driving clutch plates 6a adjacent to each other through the oil supply holes 4ad of the first clutch member 4a and the oil supply holes 4bc of the second clutch member 4b, and in addition, oil is supplied to the driven clutch plate 7b and the driving clutch plate 6b adjacent to the driven clutch plate 7b through the oil inlets 5e, the grooves 5f, and the oil outlets 5g, which define the oil flow passages of the pressure member 5.

In the present embodiment, the surface 5h has a draft angle α and the inner peripheral surface 5da of each housing recess 5d has a draft angle β as illustrated in FIG. 11. Accordingly, oil flowing along the surface 5h smoothly flows to the oil inlets 5e owing to the draft angle α, and oil flowing along the inner peripheral surfaces 5da smoothly flows to the grooves 5f owing to the draft angle β.

In the present embodiment, the driven clutch plates (7a) are attached to the clutch member (or the second clutch member 4b), and the driven clutch plate (7b) is attached to the pressure member 5. The pressure member 5 is provided with the oil flow passages through which oil is allowed to flow to the driven clutch plate 7b attached to the pressure member 5. Accordingly, the oil is sufficiently suppliable to the driven clutch plate 7b attached to the pressure member 5 and the driving clutch plate 6b adjacent to the driven clutch plate 7b.

The pressure member 5 according to the present embodiment includes: the housing recesses 5d in which the clutch springs S are housed; and the flange 5c that is able to press the driven clutch plates (7a, 7b) and the driving clutch plates (6a, 6b) against each other. The oil flow passages allow oil to flow toward the flange 5c through the housing recesses 5d. Accordingly, the oil is suppliable through the housing recesses 5d to the driven clutch plate 7b attached to the pressure member 5.

The oil flow passages each include: the oil inlet 5e in communication with the associated housing recess 5d and opening toward the center of the pressure member 5; and the oil outlet 5g opening toward the radially outer end of the pressure member 5. Oil that has flowed into the housing recesses 5d through the oil inlets 5e flows out of the oil outlets 5g such that the oil is allowed to flow to the driven clutch plate 7b attached to the pressure member 5. Accordingly, with centrifugal force, oil flows through the housing recesses 5d and is thus smoothly suppliable to the driven clutch plate 7b attached to the pressure member 5.

Each oil inlet 5e is the first hole defined adjacent to the bottom of the associated housing recess 5d, which receives an end of the associated clutch spring S. Each oil outlet 5g is the second hole defined adjacent to the flange 5c of the pressure member 5. The oil flow passages each include the groove 5f through which oil is allowed to flow from the opening edge of the associated housing recess 5d to the associated second hole. Accordingly, oil that has flowed into the housing recesses 5d through the first holes (i.e., the oil inlets) is allowed to flow to the openings of the housing recesses 5d and then flow out of the second holes (i.e., the oil outlets) through the grooves 5f. Consequently, the oil is reliably suppliable to the driven clutch plate 7b attached to the pressure member 5.

The clutch member according to the present embodiment (which includes the first clutch member 4a and the second clutch member 4b) is provided with the oil supply holes (4ad, 4bc) through which oil is allowed to flow to the driven clutch plates 7a attached to the clutch member (which includes the first clutch member 4a and the second clutch member 4b). Accordingly, oil is sufficiently suppliable to the driven clutch plates (7a) attached to the clutch member (or the second clutch member 4b) and the driven clutch plate (7b) attached to the pressure member 5.

The clutch member according to the present embodiment includes: the first clutch member 4a connected to the output member; and the second clutch member 4b having the driven clutch plates 7a attached thereto. The first clutch member 4a and the second clutch member 4b are respectively provided with the oil supply holes (4ad) and the oil supply holes (4bc). Accordingly, if the clutch member is divided into the first clutch member 4a and the second clutch member 4b, oil would be reliably suppliable to the driven clutch plates (7a) attached to the second clutch member 4b and the driven clutch plate (7b) attached to the pressure member 5.

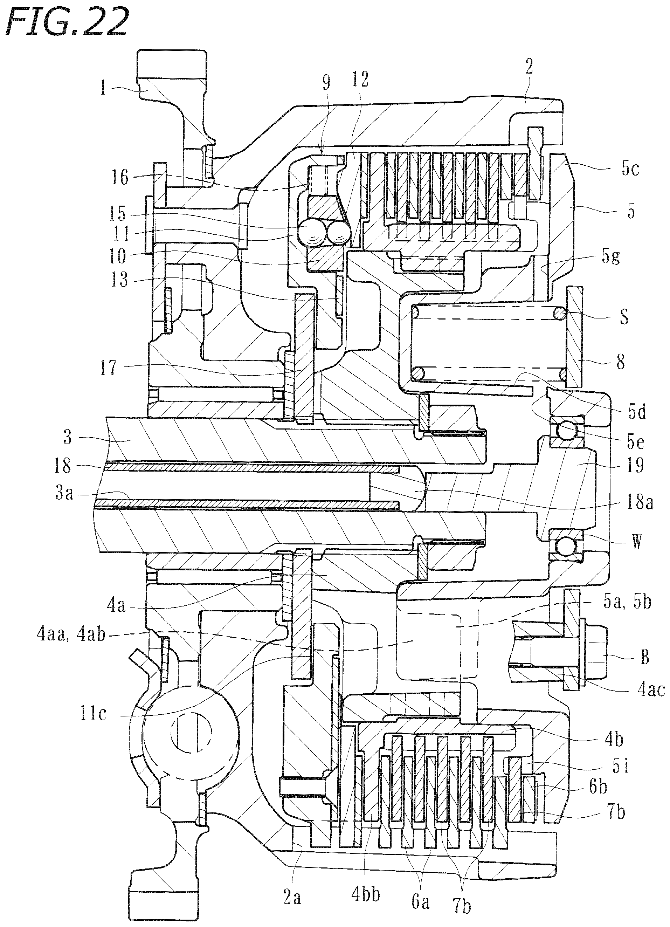

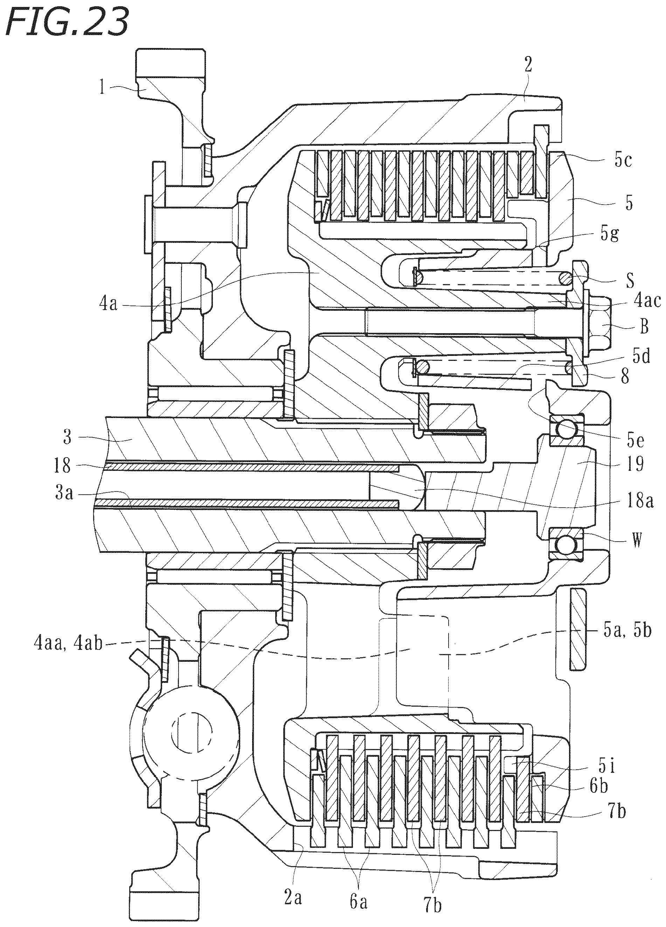

Although the present embodiment has been described thus far, the present invention is not limited to this embodiment. Alternatively, the components of each oil flow passage may be provided at positions different from those described above. As illustrated in FIG. 22, for example, the oil flow passages may each include: the oil inlet 5e located adjacent to the opening of the associated housing recess 5d; and the oil outlet 5g in communication with the opening of the associated housing recess 5d, with no groove 5f therebetween. As illustrated in FIG. 23, the present invention may be applied to a power transmission apparatus configured such that the clutch member has an undivided structure, no centrifugal clutch means 9 is provided, each boss 4ac is protruded into the associated housing recess 5d, and each housing recess 5d is in communication with the associated oil inlet 5e and the associated oil outlet 5g.

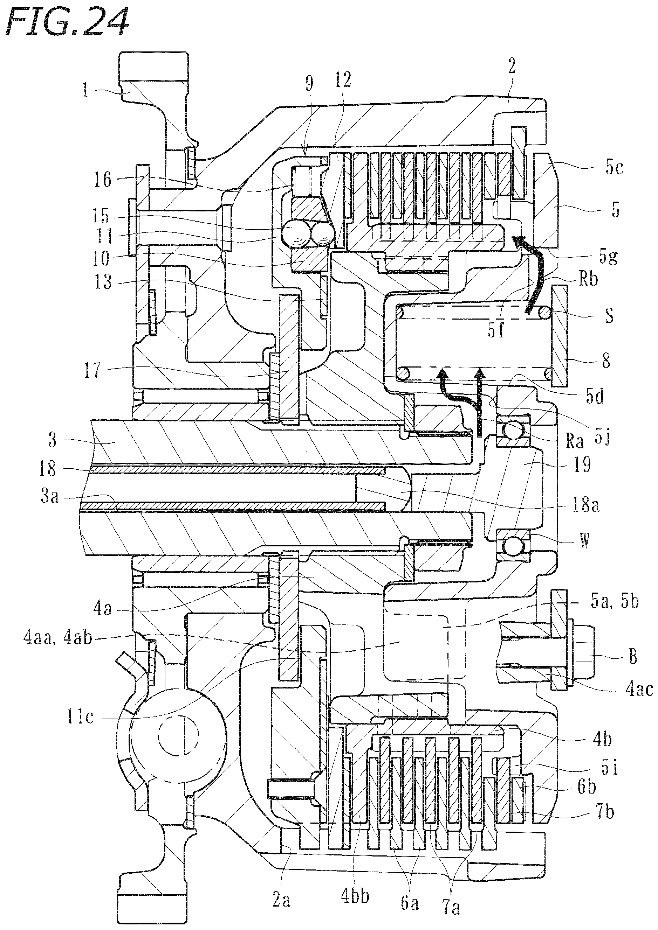

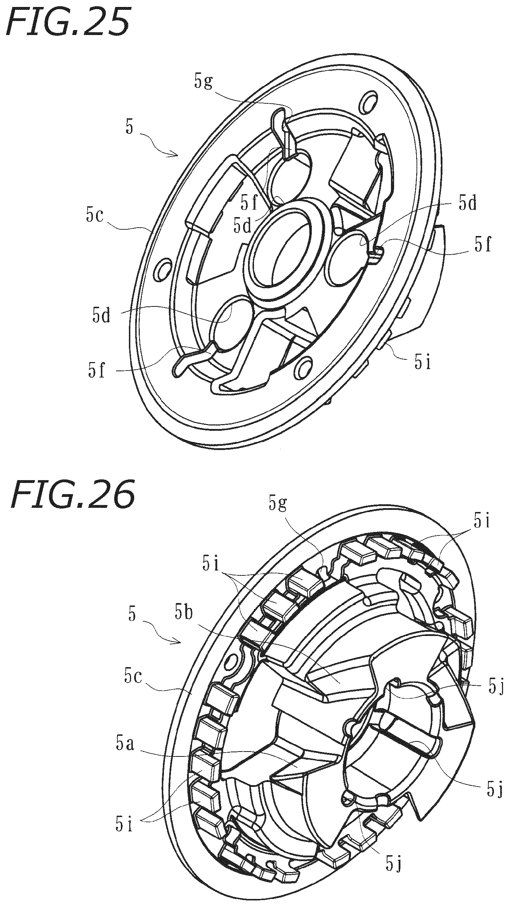

As illustrated in FIGS. 24 to 26, the oil flow passages may each include, instead of the oil inlet 5e defined adjacent to the bottom of the associated housing recess 5d, an oil inlet 5j in communication with the associated housing recess 5d and opening inward (i.e., opening toward the center of the pressure member 5). As illustrated in FIG. 26, each oil inlet 5j is an elongated hole that is an opening extending in the axial direction of the pressure member 5. The oil flow passages each include the oil inlet 5j, the groove 5f (which is similar to that in the foregoing embodiment), and the oil outlet 5g (which is similar to that in the foregoing embodiment). As illustrated in FIG. 24, with centrifugal force, oil supplied from the insertion hole 3a thus flows into the housing recesses 5d through the oil inlets 5j that are openings elongated in the axial direction (see the arrow Ra in FIG. 24), flows through the grooves 5f, and then flows out of the oil outlets 5g (see the arrows Rb in FIG. 24).

The oil flow passages may each be any passage that is defined in the pressure member 5 and allows oil to flow to the driven clutch plate 7b attached to the pressure member 5. The oil flow passages may be passages that require no involvement of the housing recesses 5d. The power transmission apparatuses according to the present invention may find applications as various multiple-plate clutch type power transmission apparatuses for, for example, motorcycles, automobiles, three-wheel or four-wheel buggies, or general purpose machines.

### INDUSTRIAL APPLICABILITY

An inventive power transmission apparatus includes driven clutch plates attached to a clutch member and a driven clutch plate attached to a pressure member. The pressure member is provided with oil flow passages through which oil is allowed to flow to the driven clutch plate attached to the pressure member. The power transmission apparatus may find applications involving, for example, change(s) in external shape or addition of other function(s).

### REFERENCE SIGNS LIST

- 1: input gear (input member)
- 2: clutch housing
- 2a: cut-out
- 3: output shaft (output member)
- 3a: insertion hole
- 4a: first clutch member
- 4aa: inclined surface (pressing assist cam)
- 4ab: inclined surface (back torque limiter cam)
- 4ac: boss
- 4ad: oil supply hole
- 4b: second clutch member
- 4ba: spline-fitting portion
- 4bb: flange
- 4bc: oil supply hole
- 5: pressure member
- 5a: inclined surface (pressing assist cam)
- 5b: inclined surface (back torque limiter cam)
- 5c: flange
- 5d: housing recess
- 5da: inner peripheral surface
- 5e: oil inlet (oil flow passage)
- 5f: groove (oil flow passage)
- 5g: oil outlet (oil flow passage)
- 5h: surface
- 5i: fitting portion
- 5j: oil inlet (oil flow passage)
- 6a, 6b: driving clutch plate
- 7a, 7b: driven clutch plate
- 8: securing member
- 9: centrifugal clutch means
- 10: weight member
- 11: holding member
- 11a: housing portion
- 11aa: inner peripheral wall surface
- 11b: groove geometry
- 11c: pushing surface
- 12: pressing member
- 12a: inclined groove
- 12b: groove geometry
- 12c: pushing surface
- 13: supporting member
- 14: first spherical member
- 15: second spherical member
- 16: urging member
- 17: auxiliary clutch plate
- 18: operating member
- 18a: operating portion
- 19: link member
- B: bolt
- S: clutch spring
- W: bearing

## Claims

1. A power transmission apparatus (K) comprising:
a clutch member (4a, 4b) housed in a clutch housing (2) that rotates together with an input member (1) that rotates with a driving force of an engine (E) of a vehicle, the clutch housing (2) having a plurality of driving clutch plates (6a, 6b) attached thereto, the clutch member (4a, 4b) having a plurality of driven clutch plates (7a) attached thereto, the driven clutch plates (7a, 7b) being arranged alternately with the driving clutch plates (6a, 6b), the clutch member (4a, 4b) being connected to an output member (3) that is able to rotate a wheel (T) of the vehicle;
a pressure member (5) movable between an operating position where the driving and driven clutch plates (6a, 6b, 7a, 7b) are pressed against each other so as to enable transmission of the driving force of the engine (E) to the wheel (T) and a non-operating position where a pressing force exerted on the driving and driven clutch plates (6a, 6b, 7a, 7b) is released so as to cut off transmission of the driving force of the engine (E) to the wheel (T); and
a clutch spring (S) to urge the driving and driven clutch plates (6a, 6b, 7a, 7b) in a direction in which the driving and driven clutch plates (6a, 6b, 7a, 7b) are to be pressed against each other or in a direction in which the driving and driven clutch plates (6a, 6b, 7a, 7b) are to be moved away from each other, wherein
the driven clutch plates (7a, 7b) include first and second driven clutch plates (7a, 7b) respectively attached to the clutch member (4a, 4b) and the pressure member (5), and
the pressure member (5) includes a housing recess (5d) in which the clutch spring (S) is housed,
a side wall extending in an axial direction of the output member (3), defining the housing recess (5d),
and at least partially located between the clutch spring (S) and the output member (3) in a radial direction of the output member (3),
a bottom wall continuous with the side wall, extending in the radial direction, and defining the housing recess (5d),
**characterized in that**
an oil inlet port (5e) defined in a portion of a boundary region between the side wall and the bottom wall, the portion at least partially facing the output member (3) in the radial direction, the oil inlet port (5e) allowing oil to flow into the housing recess (5d), and
an oil supply port (5g) through which oil that has flowed into the housing recess (5d) is supplied to the second driven clutch plate (7b) attached to the pressure member (5),
assuming a direction in which the pressure member (5) approaches the clutch member (4a, 4b) is a first direction and a direction in which the pressure member (5) moves away from the clutch member (4a, 4b) is a second direction, the whole of the oil supply port (5g) is located ahead of the oil inlet port (5e) in the second direction.

2. The power transmission apparatus (K) according to claim 1, wherein
the oil inlet port (5e) is defined in a portion of the boundary region located closest to the output member (3) in the radial direction, the oil inlet port (5e) opening toward the output member (3).

3. The power transmission apparatus (K) according to claim 1, wherein
the pressure member (5) includes a flange (5c) located radially outward of the housing recess (5d), the flange (5c) being able to press the driving and driven clutch plates (6a, 6b, 7a, 7b) against each other, and
the oil supply port (5g) which is located adjacent to an opening end of the housing recess (5d) and at least partially located radially outward of the housing recess (5d) and through which oil is supplied to the second driven clutch plate (7b) attached to the pressure member (5).

4. The power transmission apparatus (K) according to claim 3, wherein
a portion of the oil supply port (5g) is defined in the flange (5c).

## Patentansprüche

1. Eine Kraftübertragungsvorrichtung (K) aufweisend:
ein Kupplungselement (4a, 4b), das in einem Kupplungsgehäuse (2) untergebracht ist, das sich zusammen mit einem Eingangsglied (1) dreht, das sich mit einer Antriebskraft eines Motors (E) eines Fahrzeugs dreht, wobei das Kupplungsgehäuse (2) eine Vielzahl von antreibenden Kupplungsscheiben (6a, 6b) aufweist, die daran befestigt sind, wobei das Kupplungselement (4a, 4b) eine Vielzahl von angetriebenen Kupplungsscheiben (7a) aufweist, wobei die angetriebenen Kupplungsscheiben (7a, 7b) abwechselnd mit den antreibenden Kupplungsscheiben (6a, 6b) angeordnet sind, wobei das Kupplungselement (4a, 4b) mit einem Abtriebselement (3) verbunden ist, das ein Rad (T) des Fahrzeugs drehen kann;
ein Druckelement (5), das zwischen einer Betriebsstellung, in der die Antriebs- und angetriebenen Kupplungsscheiben (6a, 6b, 7a, 7b) gegeneinander gedrückt werden, um die Übertragung der Antriebskraft des Motors (E) auf das Rad (T) zu ermöglichen, und einer Nichtbetriebsstellung bewegbar ist, in der eine auf die Antriebs- und angetriebenen Kupplungsscheiben (6a, 6b, 7a, 7b) ausgeübte Druckkraft aufgehoben wird, um die Übertragung der Antriebskraft des Motors (E) auf das Rad (T) zu unterbrechen; und
eine Kupplungsfeder (S), um die antreibenden und angetriebenen Kupplungsscheiben (6a, 6b, 7a, 7b) in eine Richtung zu drücken, in der die antreibenden und angetriebenen Kupplungsscheiben (6a, 6b, 7a, 7b) gegeneinander gedrückt werden sollen, oder in eine Richtung, in der die antreibenden und angetriebenen Kupplungsscheiben (6a, 6b, 7a, 7b) voneinander weg bewegt werden sollen, wobei
die angetriebenen Kupplungsscheiben (7a, 7b) erste und zweite angetriebene Kupplungsscheiben (7a, 7b) umfassen, die jeweils an dem Kupplungselement (4a, 4b) und dem Druckelement (5) angebracht sind, und
das Druckelement (5) eine Gehäuseausnehmung (5d) aufweist, in der die Kupplungsfeder (S) untergebracht ist,
eine sich in einer axialen Richtung des Abtriebselements (3) erstreckende Seitenwand, die die Gehäuseausnehmung (5d) begrenzt und zumindest teilweise zwischen der Kupplungsfeder (S) und dem Abtriebselement (3) in einer radialen Richtung des Abtriebselements (3) angeordnet ist,
eine Bodenwand, die sich in Radialrichtung erstreckt, mit der Seitenwand in einer Linie verläuft und die Gehäuseausnehmung (5d) begrenzt,
**dadurch gekennzeichnet dass**
eine Öleinlassöffnung (5e) in einem Abschnitt eines Grenzbereichs zwischen der Seitenwand und der Bodenwand ausgebildet ist, wobei der Abschnitt in Radialrichtung zumindest teilweise dem Abtriebselement (3) zugewandt ist, wobei die Öleinlassöffnung (5e) Öl in die Gehäuseausnehmung (5d) strömen lässt, und
eine Ölzufuhröffnung (5g), durch die Öl, das in die Gehäuseausnehmung (5d) geflossen ist, der zweiten angetriebenen Kupplungsscheibe (7b) zugeführt wird, die an dem Druckelement (5) angebracht ist,
wobei eine Richtung, in der sich das Druckelement (5) dem Kupplungselement (4a, 4b) nähert, eine erste Richtung ist und eine Richtung, in der sich das Druckelement (5) vom Kupplungselement (4a, 4b) entfernt, eine zweite Richtung ist, wobei sich die gesamte Ölzufuhröffnung (5g) in der zweiten Richtung vor der Öleinlassöffnung (5e) befindet.

2. Die Kraftübertragungsvorrichtung (K) nach Anspruch 1, wobei
die Öleinlassöffnung (5e) in einem Abschnitt des Grenzbereichs definiert ist, der in radialer Richtung am nächsten zum Abtriebselement (3) liegt, wobei die Öleinlassöffnung (5e) zum Abtriebselement (3) hin geöffnet ist.

3. Die Kraftübertragungsvorrichtung (K) nach Anspruch 1, wobei
das Druckelement (5) einen Flansch (5c) aufweist, der radial außerhalb der Gehäuseausnehmung (5d) angeordnet ist, wobei der Flansch (5c) die antreibenden und angetriebenen Kupplungsscheiben (6a, 6b, 7a, 7b) gegeneinander drücken kann, und
die Ölzufuhröffnung (5g), die benachbart zu einem Öffnungsende der Gehäuseausnehmung (5d) und zumindest teilweise radial außerhalb der Gehäuseausnehmung (5d) angeordnet ist und durch die Öl zu der zweiten angetriebenen Kupplungsscheibe (7b) zugeführt wird, die an dem Druckelement (5) befestigt ist.

4. Die Kraftübertragungsvorrichtung (K) nach Anspruch 3, wobei
ein Abschnitt der Ölzufuhröffnung (5g) in dem Flansch (5c) definiert ist.

## Revendications

1. Appareil de transmission de puissance (K) comprenant :
un élément d'embrayage (4a, 4b) logé dans un carter d'embrayage (2) qui tourne conjointement à un élément d'entrée (1) tournant avec une force d'entraînement d'un moteur (E) d'un véhicule, le carter d'embrayage (2) comportant une pluralité de disques d'embrayage d'entraînement (6a, 6b) fixés à celui-ci, l'élément d'embrayage (4a, 4b) comportant une pluralité de disques d'embrayage entraînés (7a) fixés à celui-ci, les disques d'embrayage entraînés (7a, 7b) étant agencés en alternance avec les disques d'embrayage d'entraînement (6a, 6b), l'élément d'embrayage (4a, 4b) étant connecté à un élément de sortie (3) capable de faire tourner une roue (T) du véhicule ;
un élément de pression (5) mobile entre une position de fonctionnement où les disques d'embrayage d'entraînement et entraînés (6a, 6b, 7a, 7b) sont pressés les uns contre les autres de manière à permettre la transmission de la force d'entraînement du moteur (E) à la roue (T) et une position de non-fonctionnement où une force de pression exercée sur les disques d'embrayage d'entraînement et entraînés (6a, 6b, 7a, 7b) est relâchée de manière à couper la transmission de la force d'entraînement du moteur (E) à la roue (T) ; et
un ressort d'embrayage (S) pour pousser les disques d'embrayage d'entraînement et entraînés (6a, 6b, 7a, 7b) dans une direction dans laquelle les disques d'embrayage d'entraînement et entraînés (6a, 6b, 7a, 7b) doivent être pressés les uns contre les autres ou dans une direction dans laquelle les disques d'embrayage d'entraînement et entraînés (6a, 6b, 7a, 7b) doivent être éloignés les uns des autres, dans lequel
les disques d'embrayage entraînés (7a, 7b) incluent des premier et deuxième disques d'embrayage entraînés (7a, 7b) fixés respectivement à l'élément d'embrayage (4a, 4b) et à l'élément de pression (5), et
l'élément de pression (5) inclut un renfoncement de logement (5d) dans lequel est logé le ressort d'embrayage (S), une paroi latérale s'étendant dans une direction axiale de l'élément de sortie (3), définissant le renfoncement de logement (5d), et située au moins partiellement entre le ressort d'embrayage (S) et l'élément de sortie (3) dans une direction radiale de l'élément de sortie (3),
une paroi inférieure continue avec la paroi latérale, s'étendant dans la direction radiale et définissant le renfoncement de logement (5d),
**caractérisé en ce que**
un orifice d'admission d'huile (5e) est défini dans une portion d'une région de délimitation entre la paroi latérale et la paroi inférieure, la portion faisant au moins partiellement face à l'élément de sortie (3) dans la direction radiale, l'orifice d'admission d'huile (5e) permettant à l'huile de s'écouler dans le renfoncement de logement (5d), et
un orifice d'alimentation d'huile (5g) à travers lequel l'huile qui s'est écoulée dans le renfoncement de logement (5d) est alimentée au deuxième disque d'embrayage entraîné (7b) fixé à l'élément de pression (5),
en supposant que la direction dans laquelle l'élément de pression (5) s'approche de l'élément d'embrayage (4a, 4b) est une première direction et qu'une direction dans laquelle l'élément de pression (5) s'éloigne de l'élément d'embrayage (4a, 4b) est une deuxième direction, l'ensemble de l'orifice d'alimentation d'huile (5g) est situé en avant de l'orifice d'admission d'huile (5e) dans la deuxième direction.

2. Appareil de transmission de puissance (K) selon la revendication 1, dans lequel
l'orifice d'admission d'huile (5e) est défini dans une portion de la région de délimitation située le plus près de l'élément de sortie (3) dans la direction radiale, l'orifice d'admission d'huile (5e) s'ouvrant vers l'élément de sortie (3).

3. Appareil de transmission de puissance (K) selon la revendication 1, dans lequel
l'élément de pression (5) inclut une bride (5c) située radialement à l'extérieur du renfoncement de logement (5d), la bride (5c) étant capable de presser les disques d'embrayage d'entraînement et entraînés (6a, 6b, 7a, 7b) les uns contre les autres, et
l'orifice d'alimentation d'huile (5g) est adjacent à une extrémité d'ouverture du renfoncement de logement (5d) et situé au moins partiellement radialement à l'extérieur du renfoncement de logement (5d), et à travers lequel l'huile est alimentée au deuxième disque d'embrayage entraîné (7b) fixé à l'élément de pression (5).

4. Appareil de transmission de puissance (K) selon la revendication 3, dans lequel
une portion de l'orifice d'alimentation d'huile (5g) est définie dans la bride (5c).
